# EUROPEAN PATENT APPLICATION

(11) **EP 1 862 088 A1**
(43) Date of publication of application: **05.12.2007**
(21) Application number: 06076138.4
(22) Date of filing: 31.05.2006
(51) Int. Cl.: A45C 9/00, B62B 7/12

(54) **Convertible multipurpose carrier structure**

(71) Applicant: Booms, Erick, 2105 XN Heemstede (NL)
(72) Inventor: Booms, Erick, 2105 XN Heemstede (NL)
(74) Representative: Houben, Christiaan Hein Willem Frans

(57) **Abstract**

The present invention relates to a structure that can be used as a typical suitcase during travelling. The suitcase structure according to the present invention is convertible into a carrier with upright fences on four sides, which prevents goods and persons from falling off when transported on the carrier. The carrier allows transportation of at least two, but preferably three or four (small) children. The carrier may have wheels (6,12) for normal surfaces, but may also have skies when transportation over ice or snow is required. The convertible structure of the present invention has a multipurpose function in that the inner part of the suitcase is utilized as carrier space for persons, animals and/or goods when used in the form of a cart or trolley.

## Description

### FIELD OF THE INVENTION

The present invention relates to travel accessories. More in particular, the invention relates to a carrier structure, and more specifically to a suitcase that can be used as a normal suitcase for carrying goods while travelling, but which can also conveniently be converted into a carrier for transportation of larger goods or (for instance) animals and/or children.

### BACKGROUND OF THE INVENTION

Generally, while being away from home, people are limited in the number of goods that they can or are allowed to carry, and in the availability of means to transport such goods. Especially when travelling by plane, one is generally restricted in the number of luggage pieces that can be shipped, whereas family cars are generally limited in the amount of space such that only a few suitcases fit next to all other goods. Especially families with children on holiday suffer from space limitation due to sometimes excessive amounts of beach wear, diapers, food, clothes and toys that need to be carried as well.

The present invention relates a multipurpose carrier structure, preferably a suitcase, which is easily converted into a different entity.

Suitcases that have multipurpose features are known in the art. For instance, in the 1920's, US Patents Nos. 1,445,566 and 1,554,245 disclosed suitcases that could be folded-out into tables. One other, rather successful suitcase that is being used at present by many travellers on camping sites or while just spending time away from home, is the suitcase-type of structure that is unfolded into a picnic table, seating at least 4 persons: see FR 8304894 and US 4,653,804. Besides such suitcase-table structures, others have disclosed means to transfer suitcases into cribs for small children (US 4,044,411), mattresses for adults (US 4,942,948; US 5,611,414; US 5,611,625) or sun-beds (US 4,742,900).

Clearly, it is convenient to have a suitcase that is easy to transport and to carry or roll around. There are numerous disclosures of suitcases with all kinds of wheels and pulling devices attached, to enable the traveller to transport the suitcase in the most convenient way. One example of a suitcase that can be taken from one place to the other rather quickly is the suitcase with a skateboard attached (exemplified by NL 1018053 and WO 2004/093595); this allows a traveller to reach a gate at an airport quite quick without much effort.

Also, while waiting in line, some people need or have the desire to sit down. As a solution to the absence of available seats, the prior art reveals certain foldable structures, such as suitcases with seats attached; see WO 03/099056 and US 5,593,008. As young children often require transportation simply because they do not want to, or cannot (yet) walk, multiple solutions have been provided in the form of foldable child-carriers that can be used while travelling. Baby chairs/carriers that can be (un-) folded are generally known; see for instance US 5,395,154. A moveable baby chair integrated into a suitcase (which is in line with WO 03/099056), allowing the transportation of a single baby has been described in US 3,679,223.

Some known suitcases can be converted into luggage trolleys. For example US 5,318,312 discloses a utility carrier structure which is transported in the form of a suitcase. However, the device is not used as a typical suitcase; it is actually a trolley, with some handles which make that it can be carried around like a suitcase. There is no storage space for carrying luggage as one would normally do with a typical suitcase.

A suitcase that can be converted into a luggage trolley while the suitcase at the same time is still applied as a typical suitcase holding articles is known from US 4,771,871. This known suitcase has two hinged together article holding compartments which can be inverted so as to allow placement of other suitcases during travelling and while the compartments still contain their normal content. This suitcase furthermore provides a baby-seat allowing a baby to be transported while travelling. Also in US patent application 2004/0000458 is disclosed a suitcase which can be converted in a baggage cart. This known suitcase comprises two cases for containing items. The cases are coupled side by side. The suitcase has baggage retaining fences which can be raised from the top side, such that pieces of other luggage can be placed on top of the suitcase. Furthermore, the two cases can slide apart along support bars connecting the cases, such that additional space is created between the two cases where additional luggage can be placed. Thus the known cart-suitcase allows the transportation of multiple pieces of luggage around the airport, station or hotel.

### SUMMARY OF THE INVENTION

The invention provides a suitcase-cart combination comprising a suitcase and a set of wheels suitable for being mounted under the suitcase so as to form a cart. The suitcase comprises a single case having essentially two opposed shell sections, which abut or otherwise fit together around the edges thereof when the suitcase is closed. At least one of the shell sections is essentially hollow. The hollow shell section, in a state wherein the other shell section is removed from it, constitutes one or more sitting places or storage space.

While travelling the suitcase can contain the usual luggage such as clothes, bathroom items etc., whereas when the travel destination has been reached and the suitcase has been unpacked, the wheels can be mounted on at least one of the shell sections of the suitcase which can then be conveniently used for transporting children or items. The shell section constitutes a sort of tray with an upright circumferential wall which prevents goods and children from falling from the cart.

In a preferred embodiment the shell sections of the suitcase-cart combination according to the invention can be separated from each other. With this embodiment the wheels are mounted on one of the shell sections. When the cart has to be used as an open top cart, the other shell section is removed, e.g. by releasing a hinge connection which might be present between the two shell sections.

In another preferred embodiment the suitcase has two hollow shell sections which are connected by hinge means at one edge. In an opened state of the suitcase each shell section is provided with at least one wheel and the shell sections each constitute one or more sitting places or storage space. In this embodiment the two open top shell sections are positioned side by side and connected to a unit. Wheels are mounted under each of the shell sections. The hinging action between the shell sections is preferably prevented by the provision of securing means which keep the shell sections in their mutual position when used as a cart.

In another aspect, the structure of the present invention can comprise at least two sliding devices instead of wheels, for transport in snowy areas. Although in the above the invention is presented with wheels, it must be understood that also an embodiment with ski's or other sliding devices are encompassed by the present invention.

Further embodiments and advantages of the invention are described with reference to the accompanying drawings.

### BRIEF DESCRIPTION OF THE DRAWINGS

Fig. 1A shows a preferred embodiment of a suitcase-cart according to the invention, while being used as a normal closed suitcase,
Fig. 1B shows the suitcase-cart of Fig. 1A after being converted into a cart in a closed state,
Fig. 2 shows the suitcase-cart structure of Fig. 1 with the lid removed and in use as a cart for a child,
Fig. 3 shows another preferred embodiment of a suitcase-cart according to the invention,
Fig. 4A is a side view of the suitcase of Fig. 1A,
Fig. 4B shows a cross sectional view of the suitcase of Fig. 1A,
Fig. 4C shows the side view of the suitcase of Fig. 1A, where the installation of a pulling bar is illustrated,
Fig. 5 is a section view of the suitcase of Fig. 1A showing storage of the wheels and other elements,
Fig. 6A shows a bottom view of the suitcase of Fig. 1A transformed into a cart.
Fig. 6B shows the suitcase-cart of Fig. 6A in the same view which illustrates a swivelling movement of the front wheel,
Fig. 7 is another cross sectional view of the suitcase-cart of Fig. 1B
Fig. 8A and Fig. 8B show in a side and top view respectively in a schematic way the possible position of the persons and the position of seat(s) in the embodiment of Fig. 1A, and
Fig. 9A - 9C show respectively the embodiment of Fig. 3 with three different positions of the chairs and possible location of the persons.

### DETAILED DESCRIPTION

The present invention relates to a multipurpose convertible carrier structure. The invention in particular relates to a structure, preferably in the form of a suitcase that can be used as a normal suitcase while travelling, containing goods and values that need to be shipped. The structure of the present invention can be transformed into a carrying device allowing carrying at least two children and larger objects that would normally not fit into a suitcase. The structure is folded into a certain form of a trolley (also referred to as a cart), with a pushing- and/or a pulling bar, as explained in more detail below.

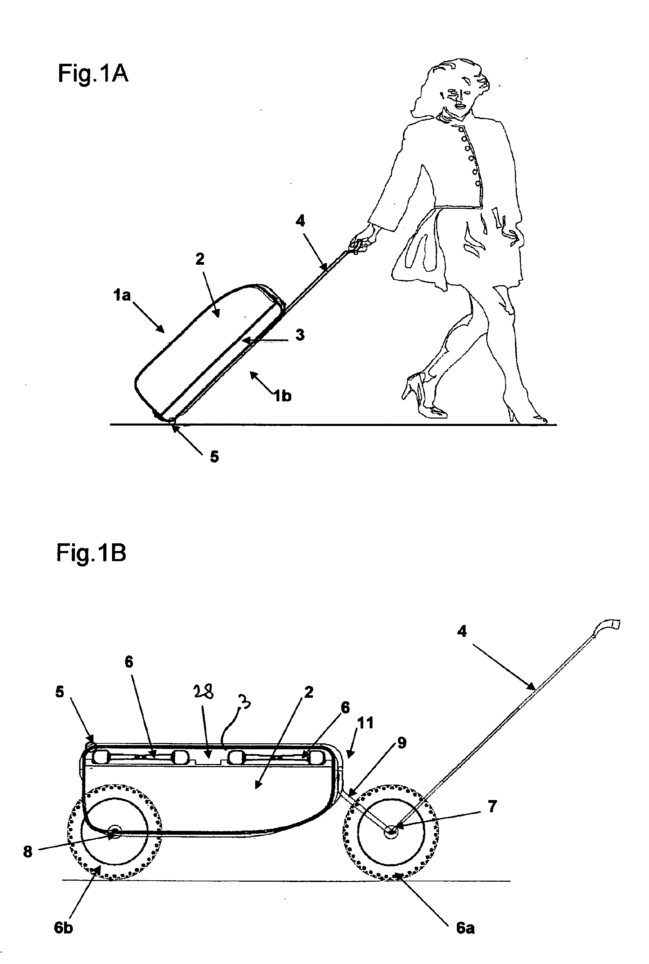

Figs. 1A and 1B illustrate the suitcase-cart structure in a single form embodiment. The suitcase has two shell sections 2, 3 which in the shown embodiment are formed as a luggage part 2 and a removable lid 3. In Fig. 1A the suitcase is shown while being transported as a normal closed suitcase. Fig. 1B shows the same suitcase after being converted into a cart but still being closed with removable lid 3 and luggage part 2 in place (possibly containing luggage). Wheels 6 are depicted in a stored state within lid 3 as well as in a mounted state when attached to connection points 7 and 8 at the shell section 2. Pulling bar 4 may function both as a pulling device for the suitcase as well as for the cart through a connection with steering fork 9 at connection point 7.

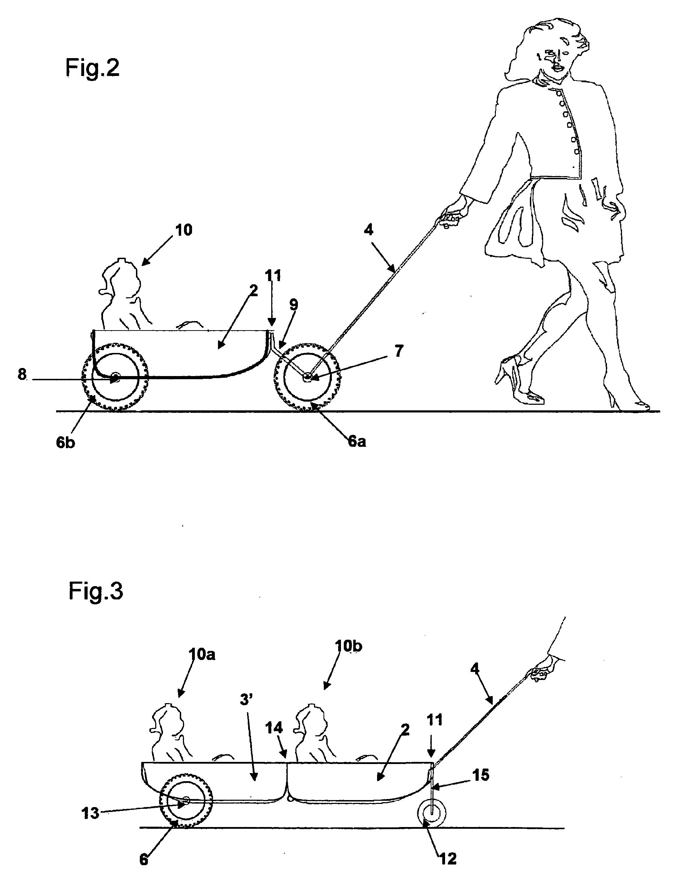

As can be seen in Fig. 2 in contrast to Fig. 3, the structure of the present invention may be utilized in a 'single' form (Fig. 2) or in a 'double' form (Fig. 3).

The single form relates to a structure in which two shell sections of the suitcase, being the lid 3 and the luggage part 2, of the open suitcase are detached from each other and only the luggage part 2 is transformed into a cart.

The double form relates to a structure in which lid 3 and luggage part 2 are of similar size and form, such that the suitcase halves are actually not detached as such, but both function as a part of one cart when flipped open (Fig. 3). Both shell sections 2 and 3 function in this embodiment as a carrier part holding goods and/or persons 10. The double carrier structure may have a different front wheel 12 connected via a connector 15, which can freely rotate through rotation of bar 15 held inside hole 11.

The hinge connection between the shell sections 2 and 3 of the 'double' form requires stabilisation between the two halves of the original suitcase at connection point 14, such that the weight of the carried goods does not cause the device to bend or break. A person skilled in the art is well aware of structures to ensure that the suitcase is not flipped back into its normal suitcase-like position. Generally, when the device is in the single form, there is no need for stabilizers as the suitcase material would generally be strong enough to prevent bending. Hence, the single form would provide less space than the double form, but would not require strengthening parts between the two halves of the structure. If the suitcase has only a low lid 3, the single form cart would preferably be made from the luggage part 2, not of the lid. If the lid of the suitcase is as deep as the holding part, there is no preference.

In another embodiment, the cart is utilized as a child carrier while travelling at airports and on the way to the destination. The luggage may be packed in a bag which fits into the suitcase. The bag may be taken from the suitcase and carried around as a backpack (with suitable carrying straps). The empty suitcase is then transformed into a cart and one can carry the luggage in the now-backpack on the back and children and/or other goods in the cart. Preferably, the suitcase will then be of the double type as it does not require the removal of lid 3, but rather have lid 3' function as a carrying part similar to luggage part 2.

In another setting, the suitcase is converted into a cart while the luggage is still present within the suitcase. If required, goods can be transported on top of the lid while the cart is pulled (see Fig. 1B); however, in this particular embodiment, the luggage space 2 does not provide fences. Fig. 2 shows the cart where the luggage has been taken out, the lid 3 has been taken off and a person or goods 10 are transported while sitting safely and without sliding off. Fig. 3 shows the double form allowing at least four children to be seated inside the suitcase cart. Here, the lid 3' is not removed but also functions as part of the cart.

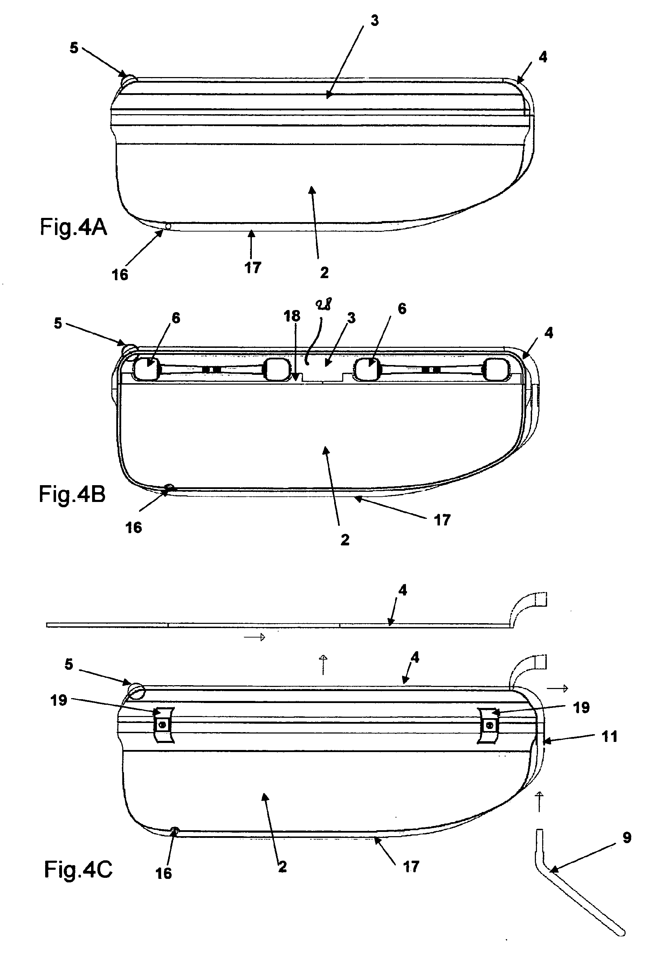

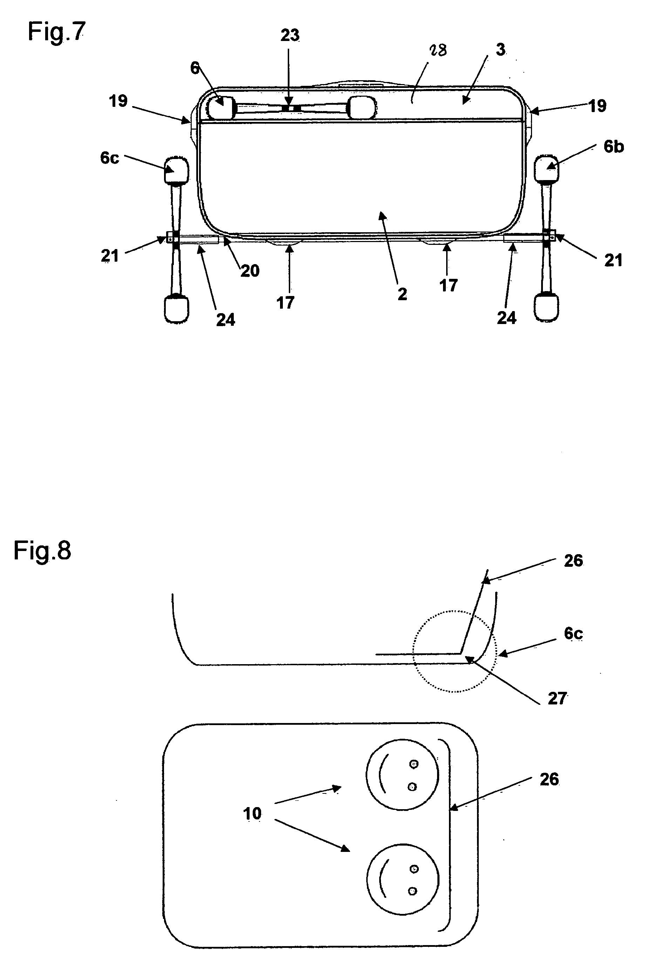

In Fig. 4A is indicated the suitcase rolling wheel 5, lid 3, pulling bar 4 which is integrated into the outer part of the suitcase. The location indicated by reference numeral 16 is a sleeve for the axle 20 of the back wheels. Ski-holders 17 are placed along the bottom part of luggage space 2 as indicated in Fig. 4B and Fig. 7. In Fig. 4B the stored wheels 6 are visible in lid 3 placed in a removable and preferably preformed holder 18 provided in a storage compartment 28. Fig. 4C illustrates how pulling bar 4 is flipped around and removed and enlarged through its telescopic features (indicated by open arrows). Closing devices 19, like locks or latches ensure closing of the suitcase. A fork 9 can be placed into holder 11 for allowing attachment of the front wheel.

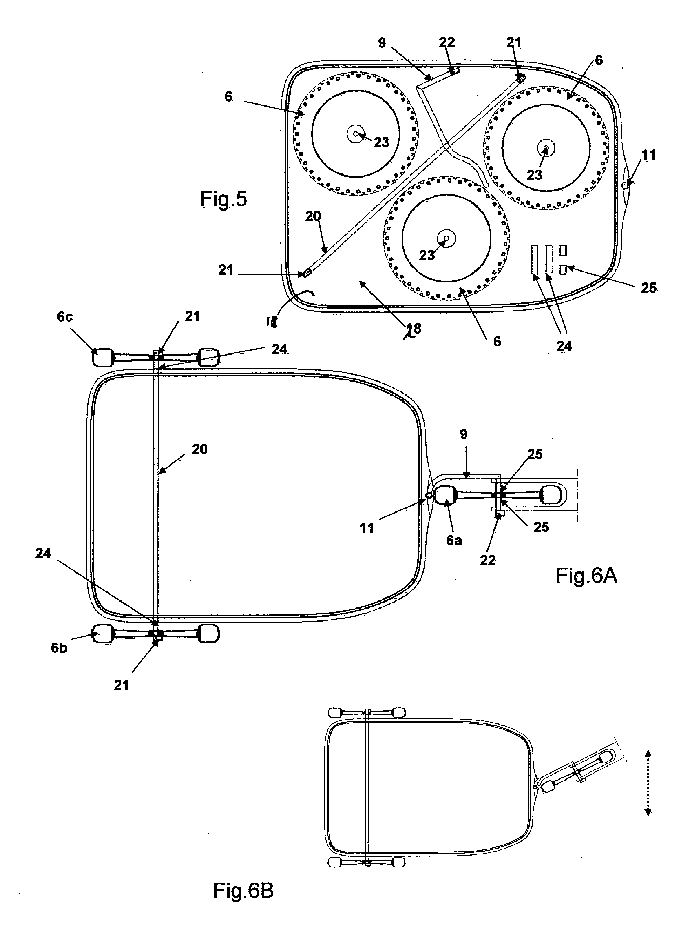

In Fig. 5 the storing of the wheels 6, the rear wheel axle 20 and the fork 9 together with the bushings 24 and 25 which fit around the axles is illustrated. Also shown are the securing pins 21 on the large axle 20 and the securing pin 22 on fork 9, ensuring safe attachment of the wheels.

In Fig. 6 the cart is shown with the axle 20 in place to hold rear wheels 6b and 6c through securing pins 21. Bushings 24 ensure that the wheels 6 do not rotate against the side of the suitcase-cart. The bended form of the fork 9 is shown which allows the wheel 6a to rotate freely, whereas bushings 25 ensure that wheel 6a does not rotate against fork 9. Fig. 6B shows how the placement of the fork 9 into hole 11 allows free movement to left and right while being moved about (indicated by an double open arrow and the non-straight position of the front wheel).

Fig. 7 also shows the arrangement of the bushings 24 and the integration of front wheel 6a still stored within lid 3 (storage compartment 28). Fastening means 19 are in place here to have a locked suitcase. Also depicted are the positions of the ski-holding slides 17.

In a preferred embodiment the structure of the present invention comprises wheels 6. The wheels 6 may be applied when the suitcase functions as a general suitcase (see Fig.1B). When the structure is converted into a cart, the structure comprises preferably three to four wheels, allowing convenient moving-around. When the structure comprises two front wheels (not shown) an extra axle is required which also allows free left-right rotation. In a preferred embodiment however, the cart only has one front wheel 6a and two rear wheels 6b.
Preferably, said wheels 6 can be stacked away in a storage compartment 28 integrated in the structure as is shown in Fig. 1B, Fig. 4B and Fig. 5. However, they may be carried separately, or they may be attached to the device. In one embodiment, the wheels are foldable as described in Fig. 3 and Fig. 7 of US 2004/000458.

In a preferred embodiment, the wheels are large, have a large surface, are preferably made from rubber and allow rolling on soft surfaces such as sand (at the beach), or in rough soil such as mud or dirt. The cart disclosed in US 2004/000458 does not allow transportation on sandy surfaces or mud. The wheels 6 and other equipment are also preferably placed in a (preformed) holder 18 which can be removed.

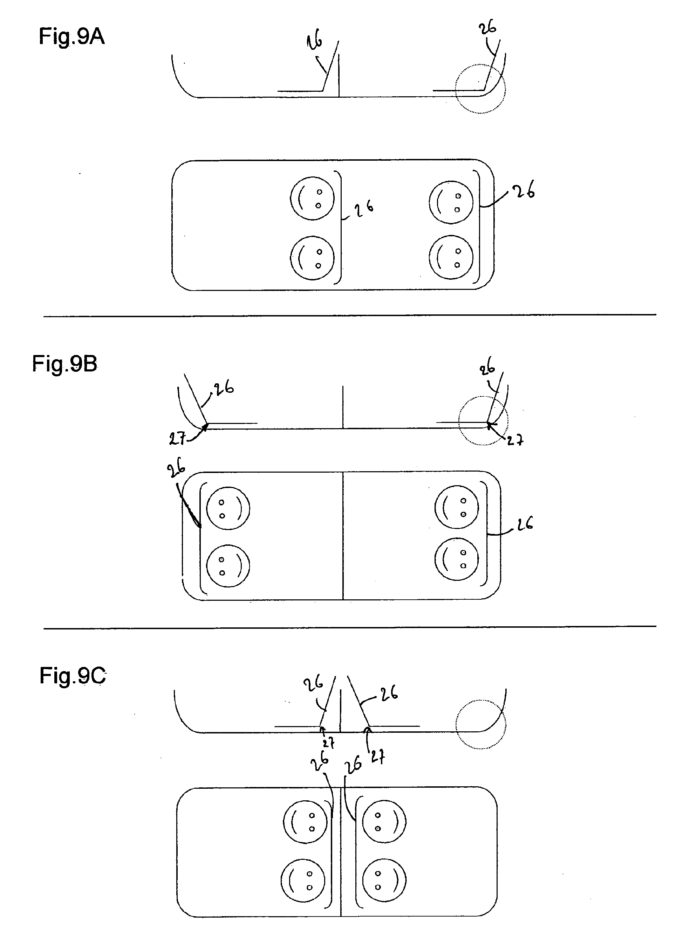

In yet another preferred embodiment, the present invention relates to a carrier structure in which seats 26 are integrated and foldable from its original suitcase-like form as shown in Fig. 8 and Fig. 9. The seats 26 may be faced forward or backward (cf. Fig. 9A, Fig. 9B and Fig. 9C). Although the present invention is not limited to any number of seats 26 allowing any number of persons, typical suitcases in the art are produced that are typically the size which would allow four seats 26 (ergo, to carry four children in a convenient manner). So, it is highly preferred to have enough space for four children, leaving enough room for other goods to take along. Bending point 27 allows the seats 26 to be placed flat and stored inside the suitcase.

An important aspect of the present invention is that the luggage part 2 of the suitcase, which is normally used for keeping clothes and other goods (while travelling by plane or car), is utilized after folding the structure into a trolley as the actual area in which the children, animals and goods are placed. This feature is clearly beneficial, since it allows safe transportation: children are safe-guarded as they cannot simply slide off or fall out of the cart as the sides of the suitcase function as a fence, and also they (or the piled up goods for that matter) cannot slide to the side and fall off. In an even more preferred embodiment, said seats have safety belts attached.

In another aspect, the structure of the present invention comprises at least two sliding devices instead of wheels. Such sliding devices (such as short skies) may be attached to ski-holders 17 and are used when the suitcase is transformed into a cart while being used in winter sport areas, where wheels are not as appropriate in moving about. The surface may be snow or ice. Preferably, said sliding devices are integrated in the suitcase and not carried around separately. They may be telescopically enlarged from within the ski-holders 17, or attached to such holders using attachment means generally used in the art. The present invention for instance provides the means to carry goods such as rented skies and shoes, which are generally quite inconvenient to carry (especially in high piles of snow). In an even more preferred embodiment, the structure of the present invention comprises means (such as straps) that allow the fastening of person-carrying skies to the upper part or at the side of the structure.

The carrier structure of the present invention may be pushed. Preferably however, the structure is pulled which allows better orientation. The pulling handle 4 is generally attached in a normal way when functioning as a regular suitcase, and replaced to be attached to the front wheels when functioning as a trolley (see Fig. 1). Preferably, said handle 4 is integrated in the suitcase, e.g. inside or attached on the outside of the suitcase, (see Fig. 4C). Preferably, the pulling (or pushing) handle has a telescope-like structure as this would take up the least space (Fig. 4C, indicated by open arrows). The wheel or wheels at the front part of the structure are preferably moveable to left and right as this allows better guidance of the cart. This is achieved by free rotation of the connecting bar 9 which is inserted into hole 11 (see Fig. 4C). The free rotation resulting in movement from left to right of the front wheel is depicted in Fig. 6B. In yet another preferred embodiment, handle 4 that is being applied for pushing or pulling is also used for pushing or pulling the device when it functions as a regular suitcase.

The rear wheels are preferably attached through an axle 20, which may be integrated or attachable to the device. In one aspect of the invention, the axle 20 is stored in the suitcase as exemplified in Fig. 5. The axle 20 can be pushed into sleeve 16, while the bushings 24 ensure that the rear wheels 6b and 6c do not touch the side of the cart, as shown in Fig. 6A and Fig. 7. The securing pin 21 on either end of axle 20 is brought through the opening at position 23 of the rear wheels 6b, 6c and flipped such that the wheels are firmly attached and can rotate freely (Fig. 6A). The bushings 24 can be stored in the storage compartment 28 provided in the lid 3 as shown in Fig. 5. However, when the wheels are foldable (and folded out in an angle of approximately 45 degrees), there is no requirement for axles to add stabilization. Also the curved connecting bar 9 has a short axle to allow attachment of front wheel 6a and short pipes 25 on either end of wheel 6a ensure that the wheel does not touch the fork 9 (see Fig. 6A). Also the shorter pipes 25 are preferably stored in lid 3 within holder 18 (see Fig. 5). Hence, the wheels, axles, handles and attachment means are preferably detachable such that they do not need to be carried along when the suitcase is just used as a suitcase and the traveller has no need to convert the device into a trolley at the place of destination.

Additional features that may be present or attached to the structure according to the present invention are warming bags (for the children to keep their feet warm while being transported through snow), steering wheels (for fun), umbrellas against the sun or other weather influences and a rain cover that can be strapped around the structure and covering the goods, animals and/or children against rain, snow or hail (and/or cold), whenever necessary. Such rain-covers may be upheld by means known to the person skilled in the art and resemble (bendable) poles that generally uphold tents, windshields and structures alike.

Summarizing, the present invention provides a structure, which generally functions as a suitcase while travelling (see Fig. 1A), which is subsequently emptied at the place of arrival and then transformed into a cart allowing children to sit in several seats, and which allows children and animals to move around to a certain extent while being transported. Moreover, the available space of the structure according to the present invention allows carrying multiple goods next to the children and/or animals. One could envision a family with two or three children and a dog (that are all perhaps too young, too small or too tired to walk). They, after having everything unpacked at the hotel, want to go to the beach and need to carry numerous piles of beach toys, bags, towels, umbrellas, drinks, food and beach wear. The present invention allows easy and safe transportation of all such children, animals and goods, without much effort, and without the need of walking endlessly back and forth to the hotel. The structure adds safety to the actual transportation, as one can focus on traffic and the transported goods (Fig. 3).

## Claims

1. Suitcase-cart combination comprising a suitcase and a set of wheels (6, 12) suitable for being mounted under the suitcase so as to form a cart, **characterized in that**, the suitcase comprises a single case having essentially two opposed shell sections (2, 3, 3'), which abut or otherwise fit together around the edges thereof when the suitcase is closed, at least one of the shell sections (2, 3') being essentially hollow, which hollow shell section (2, 3') in a state wherein the other shell section (3, 3') is removed from it, constitutes one or more sitting places or storage space.

2. Suitcase-cart combination according to claim 1, wherein the shell sections (2, 3, 3') are hingedly connected at one edge and being provided with locking means (19) at another edge for releasably locking the shell sections (2, 3, 3') together.

3. Suitcase-cart combination according to claim 1 or 2, wherein the shell sections (2, 3) can be separated from each other.

4. Suitcase-cart combination according to claim 2 and 3, wherein the hinge connection between the shell sections is releasable.

5. Suitcase-cart combination according to claim 1 or 2, wherein the suitcase has two hollow shell sections (2, 3') which are connected by hinge means at one edge, wherein in an opened state of the suitcase each shell section (2, 3') is provided with at least one wheel (6, 12) and the shell sections (2, 3') each constitute one or more sitting places or storage space.

6. Suitcase-cart combination according to claim 5, wherein securing means are provided for keeping the shell sections (2, 3') in their mutual position when used as a cart.

7. Suitcase-cart combination according to any of the preceding claims, wherein a storage compartment (28) for storing at least the set of wheels (6) is provided in one of the shell sections.

8. Suitcase-cart combination according to any of the preceding claims, wherein at least one fork (9) is provided, which is pivotally connectable to one of the shell sections, and in which a wheel (6A) is mountable.

9. Suitcase-cart combination according to any of the preceding claims, wherein one or more foldable seats (26) are integrated in at least one of the shell sections.

10. Suitcase-cart combination according to any of the preceding claims, wherein pulling or pushing means (4) are provided which are connectable to the suitcase-cart for pulling or pushing the cart.
